(19)

Europäisches Patentamt

European Patent Office

Office européen des brevets

(11)  **EP 2 750 274 B1**

(12)  **EUROPEAN PATENT SPECIFICATION**

(45) Date of publication and mention
of the grant of the patent:
**22.07.2020  Bulletin 2020/30**

(21) Application number: **12075145.8**

(22) Date of filing: **28.12.2012**

(51) Int Cl.:
*H02M 1/42* *(2007.01)*        *H02M 1/15* *(2006.01)*

(54) **DC link voltage chopping method and apparatus**

Verfahren und Vorrichtung zum Zerhacken der Gleichstromzwischenkreisspannung

Procédé et appareil à découper la tension d'un circuit intermédiaire à courant continu

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.07.2014  Bulletin 2014/27**

(73) Proprietor: **Delta Electronics (Thailand) Public
Co., Ltd.
Samutprakarn 10280 (TH)**

(72) Inventor: **Bucheru, Bogdan Tudor
San Jose, CA 95131 (US)**

(74) Representative: **Keller & Partner Patentanwälte
AG
Eigerstrasse 2
Postfach
3000 Bern 14 (CH)**

(56) References cited:
**WO-A1-96/19036      US-A- 5 532 917
US-A- 5 818 705**

Remarks:
EURO-PCT Application 12866402.6 is continued as
European application as a consequence of review
under Art. 25(2) PCT.

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 750 274 B1

**Description**

**Introduction**

0001 Today's low and medium power AC-DC converters (usually under 75W output power) are largely using single stage switching power supplies, which are generally designed with an input filter stage, a bridge rectifier that transforms the AC voltage from the line into quasi-DC voltage, a energy storage device (normally a bulk electrolytic capacitor), and the isolated DC-DC stage that effectively converts the high input voltage into low output voltage by means of high frequency switching of a magnetic transformer. The power supply unit herein described is abbreviated as PSU.

0002 The bulk capacitor performs an important function by storing the energy delivered in a non-continuous way by the AC power line and delivering it in a continuous way to the DC-DC stage of the PSU. The DC voltage stored by the bulk capacitor becomes a link between the AC input of the PSU and the DC output of the PSU, therefore it is named DC Link.

0003 The AC power line frequency is usually 50Hz or 60Hz with +/-3Hz tolerance, and after rectification becomes 100Hz+/-6Hz or 120Hz+/-6Hz. The universal AC line capability requires the PSU to work from 100Vac to 240Vac, with a +/- 10% margin, therefore the maximum AC line limit becomes 264Vac and the minimum limit becomes 90Vac.

0004 The highest energy storage requirement for the bulk capacitor appears for 90Vac/47Hz AC line, therefore this is the condition that dictates the value of the capacitance needed. The voltage rating of the bulk capacitor has to be bigger than the peak voltage of the maximum AC line (264 x $2^{1/2}$=373.35V), therefore a minimum 400Vdc rating is necessary.

0005 The low frequency power losses of the bulk capacitor are given by the rms current from the AC line, reaching maximum at 90Vac/47Hz.

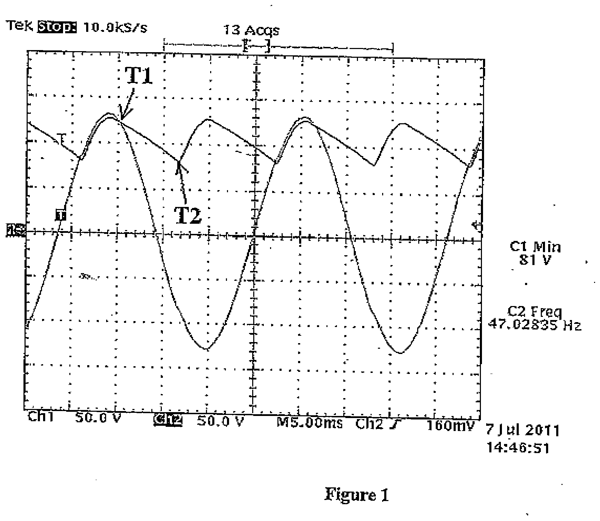

0006 A typical DC Link voltage is shown in *Figure 1* (trace 100, 50V/div) together with the 90Vac/47Hz AC line voltage (trace 102, 50V/div). The bulk capacitor needs to provide energy to the DC-DC stage (supporting the nominal output power) during $T_1$-$T_2$ time interval of each semi-cycle of the AC line, where the rectified AC line cannot deliver power to the DC-DC stage of the PSU.

0007 Considering the output power $P_o$, the bulk value $C_{bk}$, the discharge interval $T_1$ to $T_2$, and the extreme limits $V_{T1}$ and $V_{T2}$ of the bulk voltage $V_{bk}$, the energy balance for the capacitor is ideally:

0008

$$C_{bk}(V_{T1}{}^2 - V_{T2}{}^2) = 2P_o(T_1 - T_2) \qquad (1)$$

0009 The DC-DC stage always has a minimum operating input voltage ($Vin_{MIN}$) and considering $Vin_{MIN} \leq V_{T2}$ one can design a minimum capacitance value of $C_{bk}$ for a given output power $P_o$ and a given AC line voltage and frequency. The DC-DC stage needs also to operate at the maximum input voltage delivered by the AC line ($Vin_{MAX} \geq 37335V$).

0010 There are not many topologies that can operate under such a large input voltage range and it is important to limit the $Vin_{MIN}$ level for a good performance, which means that the minimum voltage of the DC Link $V_{T2}$ has to be well controlled, The classical solution of controlling $V_{T2}$ has always been increasing the bulk capacitor value $C_{bk}$, which means using bigger capacitors.

0011 Today's technological trend is towards miniaturization, especially for portable devices; therefore a demand for smaller PSU products is increasing. While the semiconductor devices are continuously progressing (smaller devices with higher power capability) and the magnetic elements can be miniaturized by operating at higher frequency, electrolytic capacitor improvements are much slower, the bulk capacitor of the DC Link becoming the principal limit for further advances of PSU products. It is an object of the present invention to provide a simple and efficient method of reducing the value, dimensions and power dissipation of the bulk capacitor of the single stage PSU.

0012 One of the most popular and simple single stage topologies used in today's isolated PSU is the fly-back converter. It can operate in continuous mode (CM), discontinuous mode (DM) and in critical mode (CrM), also known as boundary mode or quasi-resonant mode. The fly-back transformer provides the electrical isolation required by the PSU, and it is considered in many technical works as a "coupled inductor" because it uses magnetizing inductance to alternatively store and deliver the energy during a switching cycle.

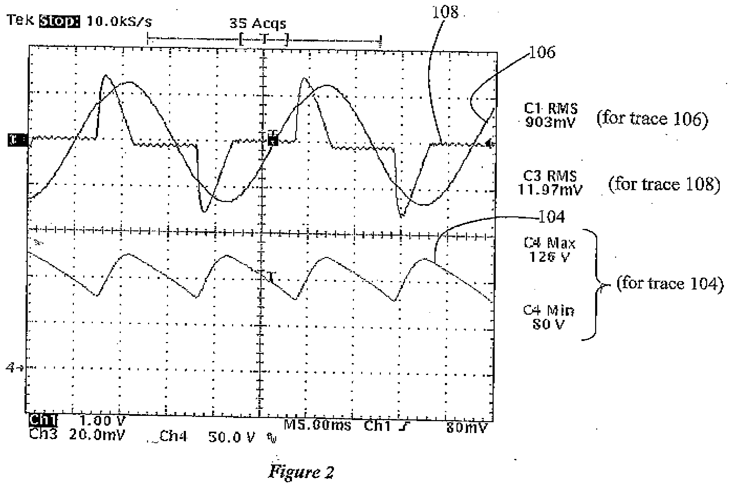

0013 The fly-back topology can be considered a "current controlled" topology, having a naturally "feed-forward" response to the input voltage variation. It is very flexible in respect of input and output voltage variations for a given turn-ratio of the transformer, being able to operate in a large duty-cycle range. Using the fly-back topology as a DC-DC stage in a PSU provides flexibility, simplicity and low cost. Figure 2 presents the typical waveforms for DC Link (trace 104, 50V/div), AC line voltage (trace 106, 100V/div) and input AC current (trace 108, 2A/div) for a 65W Fly-back converter.

0014 Even though a Fly-back converter is one of most immune topology to input variation, it still have poor performance at low input voltage, requiring a significantly large bulk capacitor to provide the DC Link at 90Vac/47Hz AC power line. A solution to reduce the required energy storage was presented by Bucheru et al. in the document cited at the end of this description, providing a synchronized auxiliary switching device that assists the main primary switch in energizing the transformer. The auxiliary switch operates at high frequency (above 100 kHz) with relatively high switching loses and it requires some complex control means. Document WO 96/19036 shows, in figure 3, a power supply unit comprising a first bridge rectifier and a second bridge rectifier. The first bridge rectifier supplies power to a bulk capacitor via a boost converter. The output of the second bridge rectifier is directly connected to the input of a DC-DC stage. The bulk capacitor is connectable to the input of the DC-DC stage by a single pole switch. The single pole switch is closed during time intervals close to the zero crossings of the input AC voltage.

## Summary of the present invention

0015 The present invention provides an apparatus to reduce the value, size and power losses of the bulk capacitor of a PSU by means of chopping the DC Link of the DC-DC stage at a low frequency (100-120Hz). It is understood that the invention is not limited to the following particular embodiments.

0016 Specifically, the present invention provides an apparatus according to claim 1 or claim 2, comprising an auxiliary bridge rectifier with AC inputs attached parallel to the inputs of an original bridge rectifier of an AC-DC power supply and with DC outputs connected directly to the input of the DC-DC stage of the said AC-DC power supply, and a semiconductor switch connected between the input of the said DC-DC stage and the bulk capacitor of the AC-DC power supply, where the semiconductor switch chops the DC Link between the bulk capacitor and the direct rectified AC line at twice the AC line frequency in such a way that the voltage ripple on the bulk capacitor is minimized. Preferably, the apparatus further includes a differential mode choke inserted between the input of the DC-DC stage and the common point of the auxiliary bridge rectifier and the semiconductor switch described herein.

0018 These and other features of the present invention will become apparent from the following detailed description and the accompanying drawings.

## Brief Description of the Drawings

0019 Figure 1 illustrates a typical DC Link voltage;

0020 Figure 2 presents the typical waveforms for DC Link;

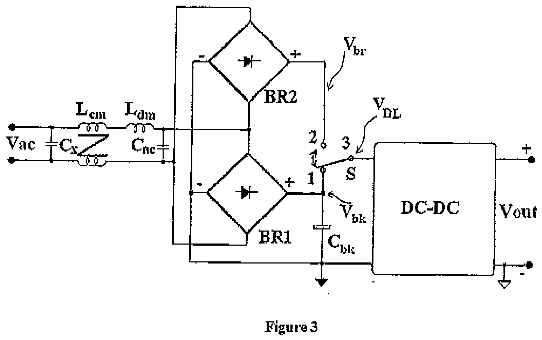

0021 Figure 3 presents schematically the DC Link chopping method;

Figure 4 presents typical waveforms for DC Link $V_{DL}$, bulk capacitor voltage $V_{bk}$, input line AC current $I_{ac}$, and switch S position;

Figure 5 presents schematically a second version of the DC Link chopping method;

Figure 6 shows a first embodiment of the invention;

Figure 7 presents the waveforms obtained using the first embodiment;

Figure 9 shows a third embodiment of the invention; and

## Detailed description

As described above, the present invention provides a method and apparatus to reduce the value, size and power losses of the bulk capacitor of a PSU by means of chopping the DC Link of the DC-DC stage at a low frequency (100-120Hz). It is understood that the invention is not limited to the following particular embodiments.

As shown in Figure 1, there is a minimum DC Link level $V_{T2}$ provided by the bulk capacitor and the DC-DC stage operates well as long the DC Link level is above its minimum input voltage $V_{T2} \geq Vin_{MIN}$.•For simplicity of the following presentation, $V_{T2} \approx Vin_{MIN}$. There is a time interval during a portion of T1-T2 period where the AC line voltage level is above the $Vin_{MIN}$ level and the AC line should be able to deliver power directly to the DC-DC stage. In today's PSU, that cannot happen because the DC Link voltage level is higher than the rectified AC line level during the T1-T2 period and the DC-DC stage feeds directly from the bulk capacitor.

0031 The present invention provides a method of reducing the energy storage needed by the bulk capacitor during the T1-T2 period by connecting the DC-DC stage on a parallel path to the rectified AC line as long as the absolute AC line voltage level is above the minimum input voltage of the DC-DC stage ($Vin_{MIN}$) and reconnected to the bulk capacitor when the rectified AC line voltage level is bellow $Vin_{MIN}$. A DC Link Chopping method is described herein.

0032 Figure 3 presents schematically the DC Link chopping method of the present invention, where a known AC line filter is present at the input of the PSU, formed by $C_x$ capacitor, $L_{cm}$ common mode choke, $L_{dm}$ differential mode choke and $C_{oc}$ capacitor; a bridge rectifier BR1 is rectifying the AC line voltage into bulk capacitor $C_{bk}$ connected to the port 1 of a two position switch S, while a second bridge rectifier BR2 is parallel rectifying the AC line voltage directly into port **2** of the two position switch S. The DC-DC stage input is connected to the common primary ground and to the output port **3** of the switch S (DC Link), while its output is connected to the secondary side of the PSU (Vout). The bulk capacitor voltage is $V_{bk}$, the rectified voltage delivered by BR2 is $V_{br}$ and the DC-DC input voltage provided by the switch S is $V_{DL}$ (DC Link voltage).

0033 The control algorithm of S is designed to minimize the voltage ripple on $C_{bk}$:

0034

$$S=1 \text{ if } V_{br}<Vin_{MIN} \text{ and } S=2 \text{ if } V_{br}{\geq}Vin_{MIN} \qquad (2),$$

0035 Based on formula (2) the DC Link value is described by:

0036

$$V_{DL}=V_{bk} \text{ if } V_{br}<Vin_{MIN} \text{ and } V_{DL}=V_{br} \text{ if } V_{br}{\geq}Vin_{MIN} \qquad (3),$$

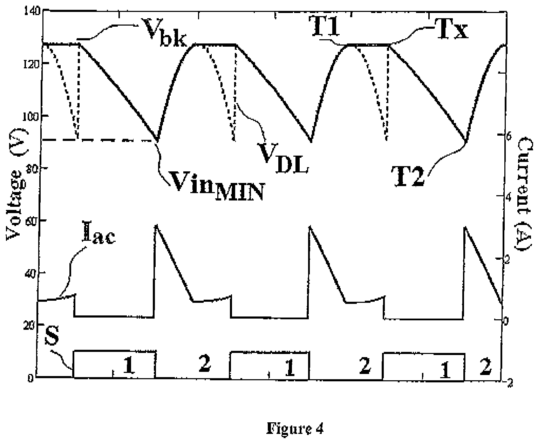

0037 *Figure 4* presents the typical waveforms for DC Link $V_{DL}$ (dotted trace 110, 20V/div), the bulk capacitor voltage $V_{bk}$ (trace 112, 20V/div), input line AC current $I_{ac}$ (trace 114, 2A/div), and switch S position (trace 116). T1 is the time when the maximum $V_{T1}$ voltage is reached and T2 is the time when the minimum voltage $V_{T2}$ is reached, while Tx is the time when the switch S changes from position 2 to position 1.

0038 Assuming the same T1 and T2 values like in Figure 1 and the same $V_{T1}$ and $V_{T2}$ like in *Figure 1*, the bulk capacitor discharging time period T2-Tx is smaller than the T2-T1 time period of Figure 1. For the same output power $P_o$ and the same input operating conditions, the resulting value of the bulk capacitor $C_{bk}$ is smaller based on formula (1). Therefore the bulk capacitor can have a smaller value and smaller dimensions when the present method of DC Link Chopping is used.

0039 The maximum reduction in $C_{bk}$ value is achieved when the transitions of the switch S between positions 1 and 2 are performed at the same DC Link value $Vin_{MIN}$, as shown in Figure 4.

0040 The rms value of the AC line current is lower when the DC Link Chopping method is used, resulting in lower conduction losses for the input filter and bridge rectifier of the PSU. At the same time the shape of the AC line current is changed, resulting in an improved power factor for the PSU.

0041 The second bridge rectifier BR2 is alternatively sharing the current with BR1, hence the conduction losses are not increased. The rms current induced in the bulk capacitor by the AC line is reduced in comparison with the classical solution, fact that leads to lower power losses for the bulk capacitor.

0042 The conduction loses of the auxiliary switch S are small due to its reduced conduction angle. The switching loses of the switch S are very small because it has a very low operation frequency (100-120 Hz +/-6Hz). All this taken in consideration, the efficiency of the PSU is improved when the DC Link Chopping method is used.

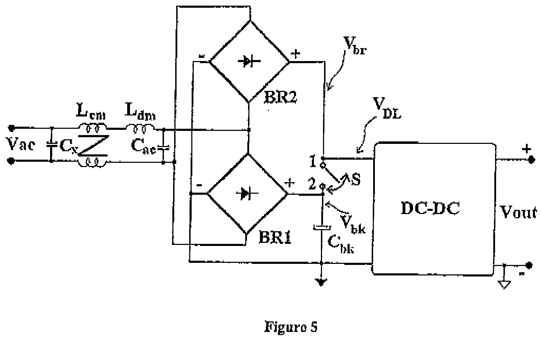

0043 Figure 5 presents schematically a second version of the DC Link chopping method, where a known AC line filter is present at the input of the PSU, formed by $C_x$ capacitor, $L_{cm}$ common mode choke, $L_{dm}$ differential mode choke and $C_{nc}$ capacitor; a bridge rectifier BR1 is rectifying the AC line voltage into the bulk capacitor $C_{bk}$ connected to the port 2 of a ON/OFF switch S (single pole), while a second bridge rectifier BR2 is parallel rectifying the AC line voltage directly into port 1 of the ON/OFF switch S. The DC-DC stage input is connected to the common primary ground and to the port 2 of the switch S (DC Link), while its output is connected to the secondary side of the PSU (Vout). The bulk capacitor voltage is $V_{bk}$, the DC-DC input voltage is $V_{DL}$ (DC Link voltage) and it coincides with the rectified voltage $V_{br}$ delivered by BR2 ($V_{DL} = V_{br}$).

0044 The chopping of the DC Link takes in consideration that the ON/OFF positions of the switch S are complemented by the natural OFF commutation of the bridge rectifier BR1 when the switch S is ON and $V_{bk}$ is bigger than the absolute voltage value of the AC line. The control algorithm of the switch S is similar with that of the first version of the DC Link chopping method:

0045

$$S=ON \text{ if } V_{br}<V_{inMIN} \text{ and } S=OFF \text{ if } V_{br}\geq V_{inMIN} \tag{4}.$$

0046 The waveforms of the second version are similar with those of the first version, presented in Figure 4.

**First Embodiment**

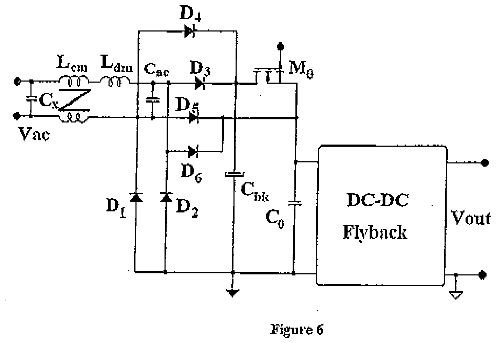

0047 Figure 6 shows a first embodiment of the invention, where the input AC filter formed by $C_x$, $L_{cm}$, $L_{dm}$ and $C_{ac}$ is followed by the bridge rectifier formed by $D_1$, $D_2$, $D_3$ and $D_4$, which charged the bulk capacitor $C_{bk}$. A second bridge rectifier is formed by $D_6$ and $D_6$ by reusing $D_1$, $D_2$ of the first bridge rectifier and is connected directly to the input of the DC-DC stage. $C_0$ is small value capacitor for high frequency filtering of the DC-DC stage input. $M_0$ switch is a semiconductor mosfet connected on the high side of the DC Link and it plays the role of S switch as described in Figure 5.

0048 The switch $M_0$ performs the low frequency chopping of the DC Link, commuting the positive input of the DC-DC stage between the rectified AC line ($D_5$ or $D_6$ active, $M_0$ OFF when the AC line absolute voltage level is bigger than $V_{inMIN}$) and the bulk capacitor $C_{bk}$ ($D_5$ and $D_6$ OFF, $M_0$ ON when the AC line absolute voltage level is lower than $V_{inMiN}$), following the control algorithm given by (4).

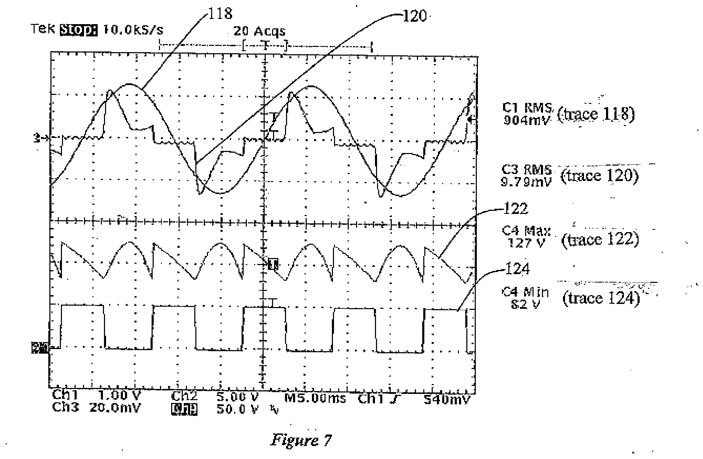

Figure 7 presents the waveforms obtained using the first embodiment, showing the AC line voltage (trace 118, 100 V/div), AC line current (trace 120, 2A/div), the DC link voltage $V_{DL}$ (trace 122, 50V/div) and the gate voltage of Mo (trace 124, 10 V/ div).

**Third Embodiment**

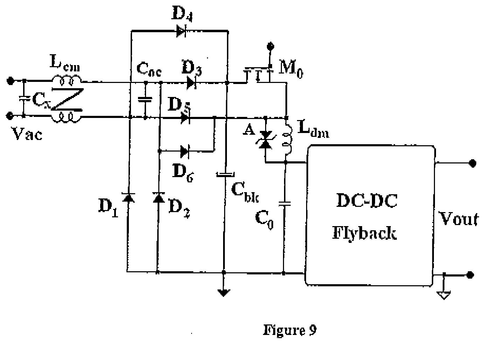

Figure 9 shows a third embodiment of the invention, where the input AC filter formed by $C_x$, $L_{em}$, and $C_{ac}$ is followed by the bridge rectifier formed by $D_1$, $D_2$, $D_3$ and $D_4$, which charged the bulk capacitor $C_{bk}$.•A second bridge rectifier is formed by $D_5$ and $D_6$ by reusing $D_1$, $D_2$ of the first bridge rectifier and is connected to the positive input of the DC-DC stage through the differential mode choke $L_{dm}$. A is a small suppression device in parallel with $L_{dm}$, which can dump the possible oscillations of $L_{dm}$. $C_0$ is small value capacitor for high frequency filtering of the DC-DC stage input. Mo switch is a semiconductor mosfet connected on the high side of the DC Link and it plays the role of S switch as described in *Figure* 5. The position of $L_{dm}$ choke between the input of the DC-DC stage and the $M_0$ switch allows the use of a bigger value for $C_0$ and limits the peak current during the turn On of $M_0$, while allowing a good attenuation of the high frequency noise present at the input of the DC-DC stage.

The switch $M_0$ performs the low frequency chopping of the DC Link, commuting the positive input of the DC-DC stage between the rectified AC line ($D_5$ or $D_6$ active, $M_0$ OFF when the AC line absolute voltage level is bigger than $Vin_{MiN}$) and the bulk capacitor $C_{bk}$ ($D_5$ and $D_6$ OFF, $M_0$ ON when the AC line absolute voltage level is lower than $Vin_{MiN}$), following the control algorithm given by (4).

The waveforms obtained by this third embodiment are similar with those of the first embodiment, as shown in Figure 7.

Thus, the foregoing description provides a method of reducing the energy storage need of a bulk capacitor providing a DC Link inside of an AC-DC power supply, by using an auxiliary switch for chopping the DC Link between the bulk capacitor and the direct rectified AC line at twice the AC line frequency in such a way that the voltage ripple on the bulk capacitor is minimized. In addition, the foregoing description provides an apparatus comprising an auxiliary bridge rectifier with AC inputs attached parallel to the inputs of an original bridge rectifier of an AC-DC power supply and with DC outputs connected directly to the input of the DC-DC stage of the said AC-DC power supply, and a semiconductor switch connected between the input of the said DC-DC stage and the bulk capacitor of the AC-DC power supply, where the semiconductor switch chops the DC Link between the bulk capacitor and the direct rectified AC line at twice the AC line frequency in such a way that the voltage ripple on the bulk capacitor is minimized.

With the foregoing description in mind, those in the art will understand various new and useful ways of providing a method and apparatus to reduce the value, size and power losses of the bulk capacitor of a PSU by means of chopping the DC Link of the DC-DC stage at a low frequency (100-120Hz).

References:

B. T. Bucheru, and Ionel Dan Jitaru, "High Efficiency Adapter Using Dual Switch PFCFlyback Single Stage," in IEEE 2008 PCIM Europe, 2008

**Claims**

1. A power supply unit comprising

a) an AC line filter at the input of the power supply unit,
b) and a first bridge rectifier (BR1) which rectifies an AC line voltage into a bulk capacitor ($C_{bk}$) directly connected to a first port of a two position switch (S),
c) and a second bridge rectifier (BR2) which rectifies parallel to the first bridge rectifier (BR1) the AC line voltage directly into a second port of the two position switch (S) and
d) a DC-DC stage having a first input port which is connected to a common primary ground and a second input port which is connected to the output port of the two position switch (S), while a DC-DC stage output is connected to the output of the power supply unit
e) wherein $V_{br}$ is a rectified voltage delivered by the second bridge rectifier (BR2), and $V_{inMIN}$ is a minimum input voltage of the DC-DC stage
f) and a control means wherein a control algorithm of the two position switch (S) implemented, the control algorithm being designed to minimize the voltage ripple on said bulk capacitor ($C_{bk}$) by switching the two position switch (S) to connect the first port if $V_{br} < V_{inMIN}$ and to connect the second port if $V_{br} \geq V_{inMIN}$,
g) such that the bulk capacitor voltage ($V_{bk}$) s always smaller or equal to the maximum of the rectified voltage $V_{br}$ delivered by the second rectifier bridge (BR2).

2. A power supply unit comprising

a) an AC line filter at the input of the power supply unit,
b) and a first bridge rectifier (BR1) which rectifies an AC line voltage into a bulk capacitor ($C_{bk}$) directly connected to a first port of a single pole switch (S),
c) and a second bridge rectifier (BR2) which rectifies the AC line voltage directly into a second port of the single pole switch (S) and
d) a DC-DC stage having a first input port which is connected to a common primary ground and a second input port which is connected to the second port of the single pole switch (S), while a DC-DC stage output is connected to the output of the power supply unit
e) wherein $V_{br}$ is a rectified voltage delivered by the second bridge rectifier (BR2), and $V_{inMIN}$ is a minimum input voltage of the DC-DC stage
f) and a control means wherein a control algorithm of the single pole switch (S) is implemented, the control algorithm being designed to minimize the voltage ripple on said bulk capacitor ($C_{bk}$) by switching the single pole switch (S) to close and thereby to connect the first and the second port if $V_{br} < V_{inMIN}$ and to open and thereby to disconnect the first and the second port if $V_{br} \geq V_{inMIN}$,
g) such that the bulk capacitor voltage ($V_{bk}$) s always smaller or equal to the maximum of the rectified voltage $V_{br}$ delivered by said second rectifier bridge (BR2).

3. A power supply unit according to one of claim 1 or 2 where the single pole switch or the two position switch is a semiconductor switch.

4. A power supply unit according to any one of claims 2 or 3 further including a differential mode choke inserted between the input of the DC-DC stage, and a common point of the second bridge rectifier (BR2) and the single pole switch (S).

5. A power supply unit according to one of claim 1 whereby transitions of the two position switch (S) between the first port and the second port are performed when a voltage delivered to the input of the DC-DC stage equals $V_{inMIN}$.

6. A power supply unit according to claim 2 where transitions of the single pole switch (S) between the first port and the second port are performed when a voltage delivered to the input of the DC-DC stage equals $V_{inMIN}$.

**Patentansprüche**

1. Leistungsversorgungseinheit, umfassend

a) ein AC-Netzfilter am Eingang der Leistungsversorgungseinheit,
b) und einen ersten Brückengleichrichter (BR1), der eine AC-Netzspannung in einen Stützkondensator ($C_{bk}$)

gleichrichtet, der direkt mit einem ersten Anschluss eines Zweipunktschalters (S) verbunden ist,

c) und einen zweiten Brückengleichrichter (BR2), der parallel zum ersten Brückengleichrichter (BR1) die AC-Netzspannung direkt in einen zweiten Anschluss des Zweipunktschalters (S) gleichrichtet, und

d) eine DC-DC-Stufe, die einen ersten Eingangsanschluss, der mit einer gemeinsamen Primärmasse verbunden ist, und einen zweiten Eingangsanschluss aufweist, der mit dem Ausgangsanschluss des Zweipunktschalters (S) verbunden ist, während ein Ausgang der DC-DC-Stufe mit dem Ausgang der Leistungsversorgungseinheit verbunden ist,

e) wobei $V_{br}$ eine durch den zweiten Brückengleichrichter (BR2) gelieferte gleichgerichtete Spannung ist und $V_{inMIN}$ eine Mindesteingangsspannung der DC-DC-Stufe ist,

f) und ein Steuermittel, in dem ein Steueralgorithmus des Zweipunktschalters (S) umgesetzt wird, wobei der Steueralgorithmus dafür konzipiert ist, die Brummspannung an dem Stützkondensator ($C_{bk}$) zu minimieren, indem er den Zweipunktschalter (S) so schaltet, dass er den ersten Anschluss verbindet, falls $V_{br} < V_{inMiN}$, und den zweiten Anschluss verbindet, falls $V_{br} \geq V_{inMIN}$,

g) derart, dass die Stützkondensatorspannung ($V_{bk}$) stets kleiner als das oder gleich dem Maximum der durch die zweite Gleichrichterbrücke (BR2) gelieferten gleichgerichteten Spannung $V_{br}$ ist.

2. Leistungsversorgungseinheit, umfassend

a) ein AC-Netzfilter am Eingang der Leistungsversorgungseinheit,

b) und einen ersten Brückengleichrichter (BR1), der eine AC-Netzspannung in einen Stützkondensator ($C_{bk}$) gleichrichtet, der direkt mit einem ersten Anschluss eines einpoligen Schalters (S) verbunden ist,

c) und einen zweiten Brückengleichrichter (BR2), der die AC-Netzspannung direkt in einen zweiten Anschluss des einpoligen Schalters (S) gleichrichtet, und

d) eine DC-DC-Stufe, die einen ersten Eingangsanschluss, der mit einer gemeinsamen Primärmasse verbunden ist, und einen zweiten Eingangsanschluss aufweist, der mit dem zweiten Anschluss des einpoligen Schalters (S) verbunden ist, während ein Ausgang der DC-DC-Stufe mit dem Ausgang der Leistungsversorgungseinheit verbunden ist,

e) wobei $V_{br}$ eine durch den zweiten Brückengleichrichter (BR2) gelieferte gleichgerichtete Spannung ist und $V_{inMIN}$ eine Mindesteingangsspannung der DC-DC-Stufe ist,

f) und ein Steuermittel, in dem ein Steueralgorithmus des einpoligen Schalters (S) umgesetzt wird, wobei der Steueralgorithmus dafür konzipiert ist, die Brummspannung an dem Stützkondensator ($C_{bk}$) zu minimieren, indem er den einpoligen Schalter (S) so schaltet, dass er sich schließt und dadurch den ersten und den zweiten Anschluss verbindet, falls $V_{br} < V_{inMIN}$, und sich öffnet und dadurch den ersten und den zweiten Anschluss trennt, falls $V_{br} \geq V_{inMIN}$,

g) derart, dass die Stützkondensatorspannung ($V_{bk}$) stets kleiner als das oder gleich dem Maximum der durch die zweite Gleichrichterbrücke (BR2) gelieferten gleichgerichteten Spannung $V_{br}$ ist.

3. Leistungsversorgungseinheit nach einem der Ansprüche 1 oder 2, wobei es sich bei dem einpoligen Schalter oder dem Zweipunktschalter um einen Halbleiterschalter handelt.

4. Leistungsversorgungseinheit nach einem der Ansprüche 2 oder 3, welche ferner eine zwischen dem Eingang der DC-DC-Stufe und einem gemeinsamen Punkt des zweiten Brückengleichrichters (BR2) und des einpoligen Schalters (S) eingesetzte Gegentaktspannungsdrossel beinhaltet.

5. Leistungsversorgungseinheit nach einem von Anspruch 1, wobei Wechsel des Zweipunktschalters (S) zwischen dem ersten Anschluss und dem zweiten Anschluss erfolgen, wenn eine dem Eingang der DC-DC-Stufe gelieferte Spannung gleich $V_{inMIN}$ ist.

6. Leistungsversorgungseinheit nach Anspruch 2, wobei Wechsel des einpoligen Schalters (S) zwischen dem ersten Anschluss und dem zweiten Anschluss erfolgen, wenn eine dem Eingang der DC-DC-Stufe gelieferte Spannung gleich $V_{inMiN}$ ist.

**Revendications**

1. Bloc d'alimentation comprenant

a) un filtre de ligne CA au niveau de l'entrée du bloc d'alimentation,

b) et un premier redresseur en pont (BR1) qui redresse une tension de ligne CA dans un condensateur de masse ($C_{bk}$) connecté directement à un premier port d'un commutateur à deux positions (S),

c) et un deuxième redresseur en pont (BR2) qui effectue un redressement en parallèle au premier redresseur en pont (BR1) de la tension de ligne CA directement dans un deuxième port du commutateur à deux positions (S), et

d) un étage CC-CC ayant un premier port d'entrée qui est connecté à une terre primaire commune et un deuxième port d'entrée qui est connecté au port de sortie du commutateur à deux positions (S), alors qu'une sortie de l'étage CC-CC est connectée à la sortie du bloc d'alimentation,

e) dans lequel $V_{br}$ est une tension redressée délivrée par le deuxième redresseur en pont (BR2), et $V_{inMIN}$ est une tension d'entrée minimum de l'étage CC-CC,

f) et un moyen de commande dans lequel un algorithme de commande du commutateur à deux positions (S) est mis en œuvre, l'algorithme de commande étant conçu pour minimiser l'ondulation de tension sur ledit condensateur de masse ($C_{bk}$) en commutant le commutateur à deux positions (S) afin de connecter le premier port si $V_{br} < V_{inMIN}$ et de connecter le deuxième port si $V_{br} \geq V_{inMIN}$

g) de telle sorte que la tension du condensateur de masse ($V_{bk}$) soit toujours plus petite que le maximum ou égale au maximum de la tension redressée $V_{br}$ délivrée par le deuxième redresseur en pont (BR2).

2. Bloc d'alimentation comprenant

a) un filtre de ligne CA au niveau de l'entrée du bloc d'alimentation,

b) et un premier redresseur en pont (BR1) qui redresse une tension de ligne CA dans un condensateur de masse ($C_{bk}$) connecté directement à un premier port d'un commutateur unipolaire (S),

c) et un deuxième redresseur en pont (BR2) qui redresse la tension de ligne CA directement dans un deuxième port du commutateur unipolaire (S), et

d) un étage CC-CC ayant un premier port d'entrée qui est connecté à une terre primaire commune et un deuxième port d'entrée qui est connecté au deuxième port du commutateur unipolaire (S), alors qu'une sortie de l'étage CC-CC est connectée à la sortie du bloc d'alimentation,

e) dans lequel $V_{br}$ est une tension redressée délivrée par le deuxième redresseur en pont (BR2), et $V_{inMIN}$ est une tension d'entrée minimum de l'étage CC-CC,

f) et un moyen de commande dans lequel un algorithme de commande du commutateur unipolaire (S) est mis en œuvre, l'algorithme de commande étant conçu pour minimiser l'ondulation de tension sur ledit condensateur de masse ($C_{bk}$) en commutant le commutateur unipolaire (S) afin de fermer et ainsi de connecter le premier et le deuxième ports si $V_{br} < V_{inMIN}$ et d'ouvrir et ainsi de déconnecter le premier et le deuxième port si $V_{br} \geq V_{inMIN}$,

g) de telle sorte que la tension du condensateur de masse ($V_{bk}$) soit toujours plus petite que le maximum ou égale au maximum de la tension redressée $V_{br}$ délivrée par ledit deuxième redresseur en pont (BR2).

3. Bloc d'alimentation selon l'une des revendications 1 ou 2 où le commutateur unipolaire ou le commutateur à deux positions est un commutateur à semi-conducteur.

4. Bloc d'alimentation selon n'importe laquelle des revendications 2 ou 3 incluant en outre une bobine d'arrêt en mode différentiel insérée entre l'entrée de l'étage CC-CC, et un point commun du deuxième redresseur en pont (BR2) et le commutateur unipolaire (S) .

5. Bloc d'alimentation selon l'une de la revendication 1 grâce auquel des transitions du commutateur à deux positions (S) entre le premier port et le deuxième port sont réalisées lorsqu'une tension délivrée à l'entrée de l'étage CC-CC est égale à $V_{inMiN}$.

6. Bloc d'alimentation selon la revendication 2 où des transitions du commutateur unipolaire (S) entre le premier port et le deuxième port sont réalisées lorsqu'une tension délivrée à l'entrée de l'étage CC-CC est égale à $V_{inMIN}$.

TeK Stop 10.0kS/s          13 Acqs

T1

T2

C1 Min
81 V

C2 Freq
47.02835 Hz

Ch1   50.0 V   Ch2   50.0 V   M5.00ms  Ch2 ∫   160mV   7 Jul 2011
14:46:51

Figure 1

Figure 2

Figure 3

Figure 4

Figure 5

Figure 6

Figure 7

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9619036 A

**Non-patent literature cited in the description**

- **B. T. BUCHERU ; LONEL DAN JITARU.** High Efficiency Adapter Using Dual Switch PFCFlyback Single Stage. *IEEE 2008 PCIM Europe,* 2008